# EUROPEAN PATENT APPLICATION

(11) **EP 2 988 240 A1**
(43) Date of publication of application: **24.02.2016**
(21) Application number: 14002920.8
(22) Date of filing: 22.08.2014
(51) Int. Cl.: G06F 21/35

(54) **Electronic transmitter and receiver with sealed data transfer that is closed to outside world**

(71) Applicant: Dorde, Cerovic, Bieograd (RS)
(72) Inventor: Dorde, Cerovic, Bieograd (RS)

(57) **Abstract**

Electronic transmitter and receiver with sealed data transfer that is closed to outside world is a device that can provide safe communication between two and/or more devices wirelessly. Communication between transmitter and receiver cannot be viewed and/or accessed from third party. Communication cannot be viewed and/or accessed from outside of closed object. Communication cannot be viewed from outside world. For example, user can take mobile (smart phone) in form of transmitter and lean it on the receiver, so these two forms closed object with their housing. Mobile phone generates data on screen that can only be viewed and recognized by receiver sensors. Data that are generated on screen (transmitted data) only can be recognized by receiver because only transmitter and receiver shares agreed communication protocol and/or rules that is predefined before start of transmission. Use ofthis system provides the way to connect two devices wirelessly and exchange data between the two with no impact on data security, data cannot be compromised and data are not visible to third party during communication as well as when Communication is done. Adding data encryption to this king of communication is not mandatory because data cannot be viewed and/or accessed from outside the system. If someone wants to add encryption, adding data encryption has no impact on device functioning but can impact the device performance. Beside this, important property introduced in this system is that communication protocol between transmitter and receiver can dynamically change during communication and changes in protocol and/or communication rules are randomly generated during communication. So, if software application in mobile phone (transmitter) decides to change protocol and/or rules for communication during communication, receiver will be able to recognize these changes, so communication can be continued without interruption and errors.

## Description

### CROSS-REFERENCE TO RELATED APPLICATIONS

Not Applicable.

### STATEMENT REGARDING STATE SPONSORED RESEARCH OR

### DEVELOPMENT

Not Applicable.

### MICROFISH APPENDIX

Not Applicable.

### BACKGROUND OF THE INVENTION

### 1. Field of the invention.

This invention relates to the field of electronics, more specifically to consumer electronics, computers, microcontrollers, digitally controlled appliance, locks, payment systems, mobile phones, authorization systems

### 2. Description of the Related Art

Fast development of IT and electronic industry has completely neglected protection of data transfer on physical level. Electronic and software industry relies on data encryption, when data protection is needed. In wired data transfer, data can be compromised when someone who is not authorized to access data connects to wires and intercept communication. In wireless systems, the problem is even bigger, because not authorized access to data is possible from distance. Of course, data encryption has huge contribution to data and system security, but if we introduce a new level of protection and combine it with data encryption, overall security of the system is higher. Consequently these questions are raised:
1. How to design electronic system than can transfer data, but not allows data leaks in form of electric signals through wires, or even worse, through electromagnetic radiation?
2. How to design device that can communicate wirelessly with other device, eliminating any way for third party to access transferred data during communication?
3. How to design device that sends usable data only to devices that are part of closed system, but sends meaningless data to outside world?

For now, there is no single device that will transfer data to other device, and not emit data either in space through electromagnetic radiation in wireless systems or through wires in wired systems. So what we need is a device that is capable of sending data with sealed communication, which means that device that sending data and device that receives data forms sealed, closed system inaccessible from outside world.

### BRIEF SUMMARY OF THE PRESENT INVENTION

Electronic transmitter and receiver with sealed data transfer that is closed to outside world solves mentioned problems of data leaks outside of the system and prevents third party to view and/or access data in any way.

When user wants to transfer some data to receiver, he puts transmitter on the receiver forming physically closed object. Newly formed object consists of the housing of transmitter and the housing of receiver joined together. Such newly formed object is capable of blocking matter and/or electromagnetic radiation to enter and/or leave the object. Level of blocking is directly associated with type of material from which the housing is made and/or color of material. For example, black plastic can block light, metal can collapse magnetic field, rubber can block water etc.

So, when transmitter and receiver are joined, forming physically closed object i.e. closed system, only receiver can receive data because there is no physical barrier between receiver sensor and transmitter in closed object. Outside world cannot receive transmitted data because housing acting as fence between transmitter and receiver from one side, and outside world from the other side.

Use of this system provides:
Connect two devices wirelessly and exchange data between the two with no impact on data security, data cannot be compromised and data are not visible to third party during communication as well as when communication is done. Adding data encryption to this king of communication is not mandatory because data cannot be viewed and/or accessed from outside the system. If someone wants to add encryption, adding data encryption has no impact on device functioning but can impact the device performance.

### BRIEF DESCRIPTION OF THE DRAWING

FIG. 1 is schematic view of the invention.

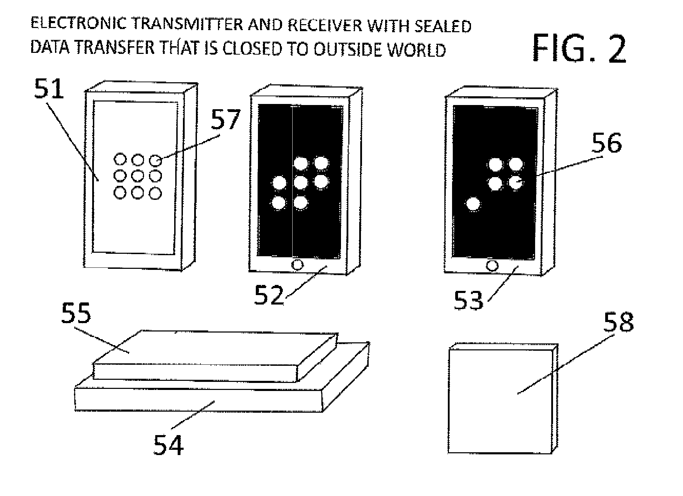

FIG. 2 showing housing of the invention, software application that running on mobile phone and generating data for sending to invention, how the invention and mobile phone can form closed object and communicate wirelessly and light filter.

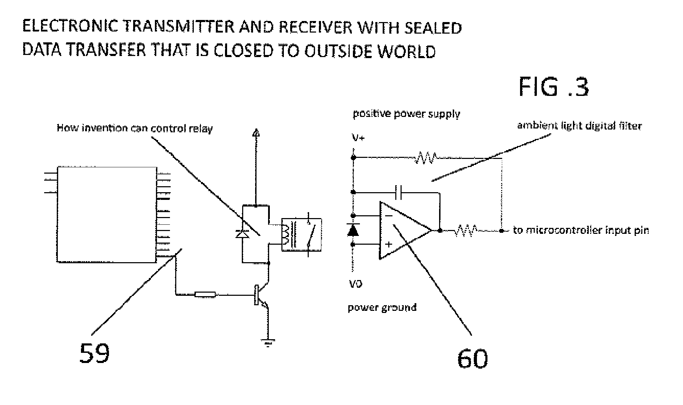

FIG. 3 showing how invention can use digital light filter and how invention can control external device.

**REFERENCE NUMERALS IN THE DRAWINGS**

| | | | |
|---|---|---|---|
| 1 | resistor | 26 | resistor |
| 2 | resistor | 27 | resistor |
| 3 | resistor | 28 | resistor |
| 4 | resistor | 29 | resistor |
| 5 | resistor | 30 | photodiode receiver |
| 6 | resistor | 31 | photodiode receiver |
| 7 | resistor | 32 | photodiode receiver |
| 8 | resistor | 33 | photodiode receiver |
| 9 | microcontroller | 34 | resistor |
| 10 | microcontroller input | 35 | resistor |
| 11 | microcontroller input | 36 | resistor |
| 12 | microcontroller input | 37 | resistor |
| 13 | microcontroller input | 38 | switch |
| 14 | microcontroller input | 39 | switch |
| 15 | microcontroller input | 40 | switch |
| 16 | microcontroller input | 41 | switch |
| 17 | microcontroller input | 42 | positive power |
| 18 | photodiode receiver | 43 | microcontroller input |
| 19 | photodiode receiver | 44 | microcontroller input |
| 20 | photodiode receiver | 45 | microcontroller input |
| 21 | photodiode receiver | 46 | microcontroller input |
| 22 | photodiode receiver | 47 | power ground |
| 23 | photodiode receiver | 48 | positive power source |
| 24 | photodiode receiver | 49 | power connector |
| 25 | photodiode receiver | 50 | power source ground |
| 51 | invention housing | | |
| 52 | mobile (smart phone) | | |
| 53 | software application running | | |
| 54 | invention as receiver | | |
| 55 | mobile (smart phone) placed on top of invention | | |
| 56 | light generated by mobile (smart) phone software application | | |
| 57 | holes in invention housing as tunnels for light that will reach invention | | |
| | sensors | | |
| 58 | light filter material | | |
| 59 | control of external device | | |
| 60 | digital light filter | | |

### DETAILED DESCRIPTION OF THE INVENTION

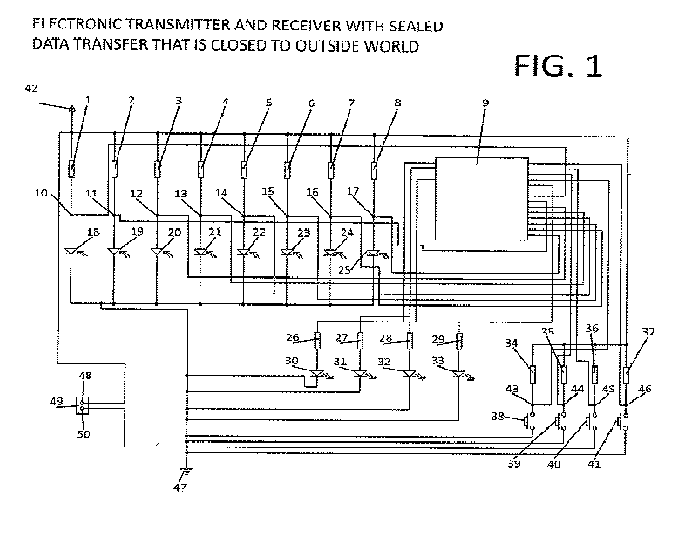

FIG. 1 shows schematic diagram of the invention.

When power connector (49) is connected and positive power source (48) and power source ground (50) are connected to 5V power supply, microcontroller (9) starts and through microcontroller input (10,11,12,13,14,15,16,17), microcontroller (9) listen to change in volts on corresponding microcontroller input (10,11,12,13,14,15,16,17). Resistor (1) is connected to power ground (47) through photodiode receiver (18) and to microcontroller (9) through microcontroller input (10), resistor (2) is connected to power ground (47) through photodiode receiver (19) and to microcontroller (9) through input (11), resistor (3) is connected to power ground (47) through photodiode receiver (20) and to microcontroller (9) through input (12), resistor (4) is connected to power ground (47) through photodiode receiver (21) and to microcontroller (9) through input (13), resistor (5) is connected to power ground (47) through photodiode receiver (22) and to microcontroller (9) through input (14), resistor (6) is connected to power ground (47) through photodiode receiver (23) and to microcontroller (9) through input (15), resistor (7) is connected to power ground (47) through photodiode receiver (24) and to microcontroller (9) through input (16), resistor (8) is connected to power ground (47) through photodiode receiver (25) and to microcontroller (9) through input (17). Voltage at the corresponding microcontroller input (10,11,12,13,14,15,16,17) is changing when light rays hits photodiode receiver (18,19,20,21,22,23,24,25). Photodiode receiver change resistance when light is present, which cause voltage drop on corresponding microcontroller input (10,11,12,13,14,15,16,17). When voltage is lower than half of the potential difference between positive power (42) and power ground (47), microcontroller (9) will internally in software mark corresponding input pin as LOW or 0, and when voltage is higher than half of the potential difference between positive power (42) and power ground (47), microcontroller (9) will internally in software mark corresponding input pin as HIGH or 1. Led (30) is connected to microcontroller (9) though resistor (26) and is connected to power ground (47), led (31) is connected to microcontroller (9) though resistor (27) and is connected to power ground (47), led (32) is connected to microcontroller (9) though resistor (28) and is connected to power ground (47), led (33) is connected to microcontroller (9) though resistor (29) and is connected to power ground (47). Microcontroller (9) controls operation of led (30,31,32,33) by setting corresponding output to HIGH/LOW and turn corresponding led on/off. Switch (38) is connected to resistor (34) and microcontroller input (43), switch (39) is connected to resistor (35) and microcontroller input (44), switch (40) is connected to resistor (36) and microcontroller input (45), switch (41) is connected to resistor (37) and microcontroller input (46). When switch (38,39,40,41) is closed, voltage on microcontroller input(43,44,45,46) is 0 volts and microcontroller (9) will internally in software mark corresponding microcontroller input as LOW. When switch (38,39,40,41) is open, voltage on microcontroller input(43,44,45,46) is equal as potential difference between positive power(42) and power ground (47) and microcontroller (9) will internally in software mark corresponding microcontroller input as HIGH.

## Claims

1. Electronic transmitter and receiver with sealed data transfer that is closed to outside world comprising:
a. Mobile phone (smart phone) software application
b. Microcontroller software(firmware)
c. Electronic device

2. Electronic transmitter and receiver with sealed data transfer that is closed to outside world as, recited in claim 1 wherein said Mobile phone (smart phone) software application can load in memory random array of bytes with arbitrary array length and then start to choose byte from array and combine values of chosen bytes within predefined software functions. Functions are executed randomly in a way that function calls are controlled by Thread object that acquired object lock, and depending on which thread has entered object monitor , function from that thread run method is called. Mobile phone (smart phone) software application will generate on screen circles that represents byte value as identifier of thread that currently execute function. As recited in claim 1 wherein said Electronic device will convert light coming out from circles generated on screen to HIGH/LOW and /or 1/0 depending on light intensity and will form byte value internally in software and will use formed byte value as an identifier of thread that executing function in Mobile phone (smart phone) software application.

3. Electronic transmitter and receiver with sealed data transfer that is closed to outside world as recited in claim 1 wherein said Electronic device can internally in software step through received byte array and rearrange byte array by shifting position of bytes either to right side or left side by one position and can keep shifting the bytes position while number of shifted positions is not equal to number of received byte array length.

4. Electronic transmitter and receiver with sealed data transfer that is closed to outside world as recited in claim 1 wherein said Electronic device converts light coming out the circles generated on screen by as recited in claim 1 wherein said Mobile phone (smart phone) software application to HIGH/LOW depending on light level, so as recited in claim 1 wherein said Electronic device use light from circles generated on screen rather than using image formed on screen.

5. Electronic transmitter and receiver with sealed data transfer that is closed to outside world as recited in claim 1 wherein said Electronic device can recognize if any function in as recited in claim 1 wherein said Mobile phone (smart phone) software application has change its predefined operation in a way that as recited in claim 1 wherein said Electronic device knows possible outcome of executed function.

6. Electronic transmitter and receiver with sealed data transfer that is closed to outside world as recited in claim 1 wherein said Electronic device changes value of internally defined variable by passing this variable to internally functions that are the same as functions that are defined in as recited in claim 1 wherein said Mobile phone (smart phone) software application. As recited in claim 1 wherein said Electronic device pass internally defined variable to the same function as one that is last called in as recited in claim 1 wherein said Mobile phone (smart phone) software application, and pass it always when function is called in as recited in claim 1 wherein said Mobile phone (smart phone) software application. Because functions in as recited in claim 1 wherein said Mobile phone (smart phone) software application are called randomly, and as recited in claim 1 wherein said Electronic device can recognize which function is called and knows the outcome of called function in as recited in claim 1 wherein said Mobile phone (smart phone) software application, as recited in claim 1 wherein said Electronic device can monitor changes of calling function in as recited in claim 1 wherein said Mobile phone (smart phone) software application so we can say that as recited in claim 1 wherein said Electronic device can dynamically monitor changing in protocol that is defined by the ordered sequence of function call.

7. Electronic transmitter and receiver with sealed data transfer that is closed to outside world as recited in claim 1 wherein said Electronic device and as recited in claim 1 wherein said Mobile phone (smart phone) software application can form closed object with their housing when Mobile phone (smart phone) is set on top of as recited in claim 1 wherein said Electronic device with screen facing towards the as recited in claim 1 wherein said Electronic device.

8. Electronic transmitter and receiver with sealed data transfer that is closed to outside world as recited in claim 1 wherein said Electronic device can use light filter placed over the holes in invention housing that acting as tunnels for light that will reach invention sensors.

9. Electronic transmitter and receiver with sealed data transfer that is closed to outside world as recited in claim 1 wherein said Electronic device can use digital light filter to avoid unwanted background and/or ambient light to influence sensor behavior.

10. Electronic transmitter and receiver with sealed data transfer that is closed to outside world as recited in claim 1 wherein said Electronic device can control external device by providing output logic HIGH/LOW. by sending encrypted messages to external device through UART, I2C, SPI or custom communication protocol either set by hardware outputs or internally in software.

11. Electronic transmitter and receiver with sealed data transfer that is closed to outside world as recited in claim 1 wherein said Electronic device can request pin code to continue actions for controlling external device, or it can control external device or trigger action without pin code request.
